(19) Europäisches Patentamt
European Patent Office
Office européen des brevets

(11) **EP 1 793 301 A1**

(12) **EUROPEAN PATENT APPLICATION**

(43) Date of publication:
**06.06.2007 Bulletin 2007/23**

(51) Int Cl.:
*G06F 1/04* (2006.01)

(21) Application number: **05300977.5**

(22) Date of filing: **30.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing
92100 Boulogne-Billancourt (FR)**

(72) Inventors:
• **Zhou, Feng Shuan
46032, Carmel
IN Indiana 46032 (US)**

• **Cheah, Sin Hui
Camel, IN Indiana 46032 (US)**
• **Wu, Bozhong
518038, Shenzhen (CN)**

(74) Representative: **Rossmanith, Manfred et al
Deutsche Thomson-Brandt GmbH
European Patent Operations
Karl-Wiechert-Allee 74
30625 Hannover (DE)**

(54) **Method and apparatus for providing a stable clock signal**

(57)     The disclosed embodiments relate to a low cost signal adjustment or calibration method and apparatus for generating a stable clock signal that is used to drive a communications interface (e.g., a UART port (76)). More specifically, a processor (61) within a microcontroller (60) uses a low frequency crystal oscillator (72) and a scaling module (78) to remove a frequency offset error contained in an unstable clock signal generated by a high frequency RC oscillator (64). The processor detects and removes the frequency offset error when specific triggering events occur such as when the microcontroller is powered up, awaken from a sleep or stand by mode, or experiences a communications error.

**FIG. 3**

**Description**

FIELD OF THE INVENTION

The present invention generally relates to providing a stable clock signal, and more particularly, to a technique for providing a stable Universal Asynchronous Receiver/Transmitter (UART) clock signal.

BACKGROUND OF THE INVENTION

This section is intended to introduce the reader to various aspects of art which may be related to various aspects of the present invention which are described and/or claimed below. This discussion is believed to be helpful in providing the reader with background information to facilitate a better understanding of the various aspects of the present invention. Accordingly, it should be understood that these statements are to be read in this light, and not as admissions of prior art.

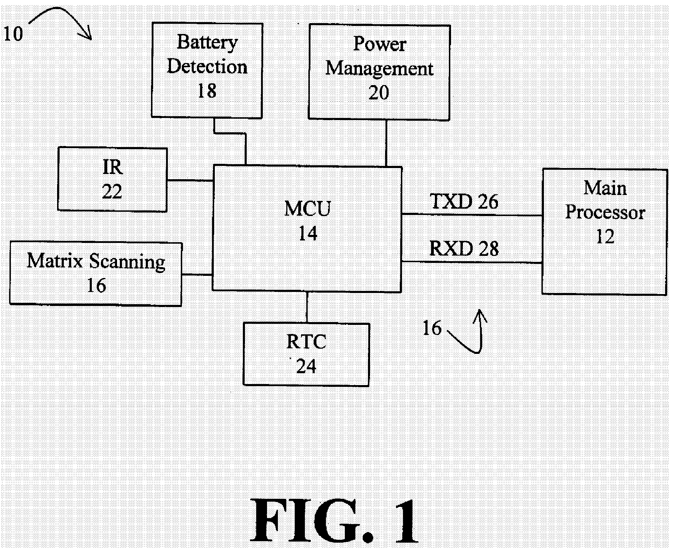

Referring now to FIG. 1, an exemplary processing arrangement 10 typically found in portable Audio/Video (AV) devices such as AV MP3 players is shown. It should be appreciated that, for purposes of clarity, every feature or element of processing arrangement 10 is not shown or described herein. The use of features or elements not shown or discussed herein is deemed within the knowledge of one skilled in the art of AV devices. Processing arrangement 10 includes a main processor 12 and a microcontroller (MCU) 14 communicatively connected to main processor 12 via a serial bus such as a Universal Asynchronous Receiver/Transmitter (UART) bus 16. Main processor 12 is a sophisticated processor responsible for control of AV device functions including, but not limited to, AV playback, User Interface (UI) navigation, file system management and embedded Operating System (OS) execution. MCU 14 is a low cost controller responsible for control of AV device functions such as key matrix scanning 16, battery detection 18, power control 20, IR remote controller detection 22 and real time clock (RTC) generation 24. MCU 14 communicates with Main Processor 12 by transmitting signals TXD 26 and receiving signals RXD 28 over UART bus 16.

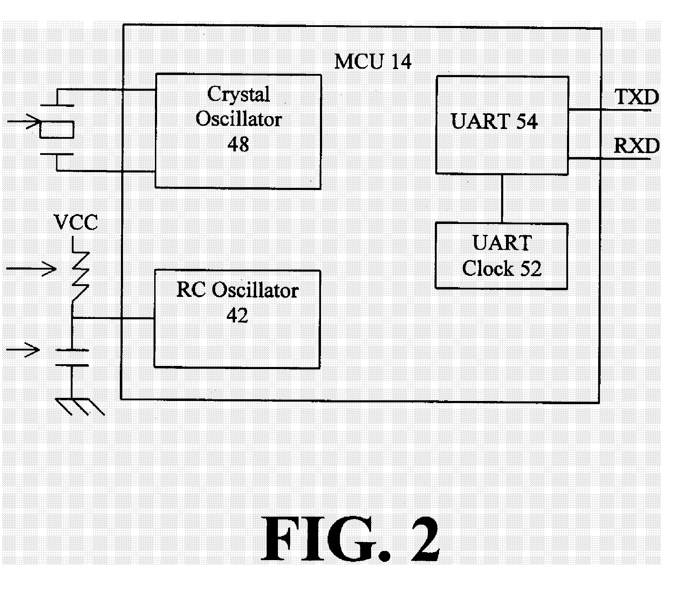

Referring now to FIG. 2, the timing circuitry of a conventional MCU 14 is illustrated. The timing circuitry includes an RC oscillator 42 connected to a resistor 44 and capacitor 46, a crystal oscillator 48 connected to a crystal 50 such as a 32.768KHz crystal, and a UART clock 52 connected to a UART module or port 54. The RC oscillator 42 is a high speed oscillator used as the main system clock for the MCU 14 and MCU peripherals 16-22. In general, the RC oscillator frequency may be within the range of 2 to 8 MHz. The frequency of the RC oscillator 42 varies with temperature, resistor 44 and capacitor 46 values, power supply fluctuations and the like. As a result, the RC oscillator 42 may have a frequency offset error as high as 10%. The crystal oscillator 48 is a low speed oscillator used for the RTC generation 24. The RTC is used by the AV device to track real time so the AV device can timestamp content, maintain a calendar, and provide the display of a on screen clock to a user. The RTC can also serve as the system clock when the AV device is in standby mode or some other low current consumption mode. The performance of the crystal oscillator is typical very good (e.g., 32.768kHz +/- 100ppm). To ensure proper communication between MCU 14 and main processor 12, the UART module 54 needs to driven by a 115.2kHz clock signal that has a frequency offset error of less than 5%. One possible approach to ensure that the UART module 54 operates at the proper frequency and below the 5% frequency offset error tolerance is to have a dedicated UART clock such as a 115.2kHz crystal oscillator clock. A drawback of using a dedicated UART clock is that it increases the cost of the MCU 14 and, as a result, the cost of the AV device. Another approach would be to use either the RC oscillator 42 or the crystal oscillator 48 as the UART clock 52. However, the drawbacks with this approach are that the frequency offset of the RC oscillator 42 exceeds the 5% frequency offset error tolerance of the UART module 54 and the frequency of the crystal oscillator (e.g., 32.768 kHz) can not support the 115.2 kHz clock signal required to drive the UART module 54. Yet another approach would be to replace the RC oscillator 42 with a 2 to 8 MHz crystal oscillator and have the main system clock share the oscillator with the UART module 54. Although this shared approach is less costly than having a dedicated 32.768 kHz UART clock, it still has the drawback of undesirably increasing the cost of the MCU 14 and, as a result, the cost of the AV device.

The present invention is directed towards overcoming these drawbacks.

SUMMARY OF THE INVENTION

The disclosed embodiments relate to a low cost signal adjustment or calibration method and apparatus for generating a stable clock signal that is used to drive a communications interface (e.g., a UART port). More specifically, a processor within a microcontroller uses a low frequency crystal oscillator and a scaling module to remove a frequency offset error contained in an unstable clock signal generated by a high frequency RC oscillator. The processor detects and removes the frequency offset error when specific triggering events occur such as when the microcontroller is powered up, awaken from a sleep or stand by mode, or experiences a communications error.

BRIEF DESCRIPTION OF THE DRAWINGS

In the drawings:

FIG. 1 is a block diagram showing an exemplary MCU and main processor arrangement in an AV device;

FIG. 2 is a block diagram illustrating conventional MCU timing circuitry;

FIG. 3 is a block diagram illustrating MCU timing circuitry of the present invention; and

FIG. 4 is a process flow diagram illustrating the operation of the MCU timing circuitry of Fig. 3 in accordance with the present invention.

## DETAILED DESCRIPTION OF THE PREFERRED EMBODIMENT

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

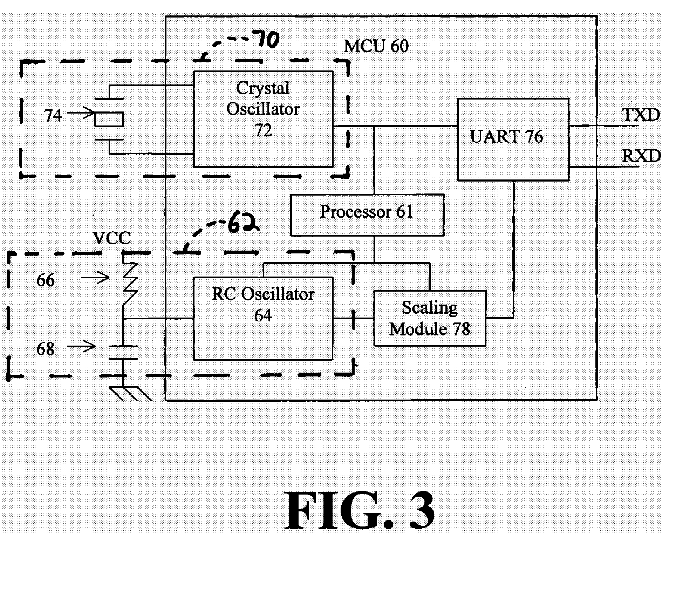

Referring now to FIG. 3, the timing circuitry of the MCU 60 of the present invention is illustrated. It should be appreciated that the timing circuitry may be implemented in hardware, software or a combination of hardware and software. The timing circuitry includes a processor 61 connected to a main system clock 62 (including an RC oscillator 64, resistor 66 and capacitor 68), an RTC 70 (including a crystal oscillator 72 and a crystal 74 such as a 32.768KHz crystal), and a communications interface 76 (such as a UART module or port) via a scaling module 78. Main system clock 62 is also connected to the UART module or port 76 via the scaling module 78.

The RC oscillator 64 of the main system clock 62 is a high speed oscillator operating within the range of 2 to 8 MHz. The frequency of the RC oscillator 64 varies with temperature, resistor 66 and capacitor 68 values, power supply fluctuations and the like. As a result, the frequency offset error of the RC oscillator 64 may be as high as 10%. The crystal oscillator 72 of the RTC 70 is a low speed oscillator used for the RTC signal generation. The RTC is used by the AV device to track real time so the AV device can timestamp content, maintain a calendar, and provide the display of a on screen clock to a user. The RTC can also serve as the system clock when the AV device is in standby mode or some other low current consumption mode. The crystal oscillator 72 can also serve as the system clock when the AV device is in standby mode or some other low current consumption mode. The performance of the crystal oscillator is typical very good (e.g., 32.768kHz +/- 100ppm).

As discussed above, to ensure proper communication between MCU 60 and main processor 12, the UART module 76 should be driven by a stable 115.2 kHz clock signal having a frequency offset error of less than 5%. Also, as discussed above, it is desirable to achieve the UART clock frequency and frequency error tolerance goals without significantly increasing the cost of the MCU and AV device. The present invention achieves these goals through the use of the system clock 62 and RTC 70 in conjunction with the scaling module 78 and a software routine executed by processor 61. More specifically, the clock signal generated by main system clock 62 is passed to scaling module 78. Scaling module 78 adjusts the received clock signal based on a scaling factor K and outputs a scaled clock signal that is used to drive the UART module 76. As discussed in further detail below, the scaling factor is used to adjust the clock signal generated by main system clock 62 to ensure that scaled signal used to drive UART module 76 is approximately 115.2 kHz give or take a less than 5% frequency offset error. The relationship between the frequency of the clock signal generated by the main system clock 62, the frequency of the scaled clock signal output by scaling module 78 and the scaling factor K is as follows:

$$F_U = F_m/K$$

Wherein Fm is the frequency of the clock signal generated by main system clock 62 and Fu is frequency of the scaled clock signal output by scaling module 78. Since the frequency of the main system clock's 62 RC oscillator 64 varies with temperature, resistor 66 and capacitor 68 values, power supply fluctuations and the like, scaling factor K must be periodically adjusted to ensure that the frequency Fu of the scaled clock signal is stable.

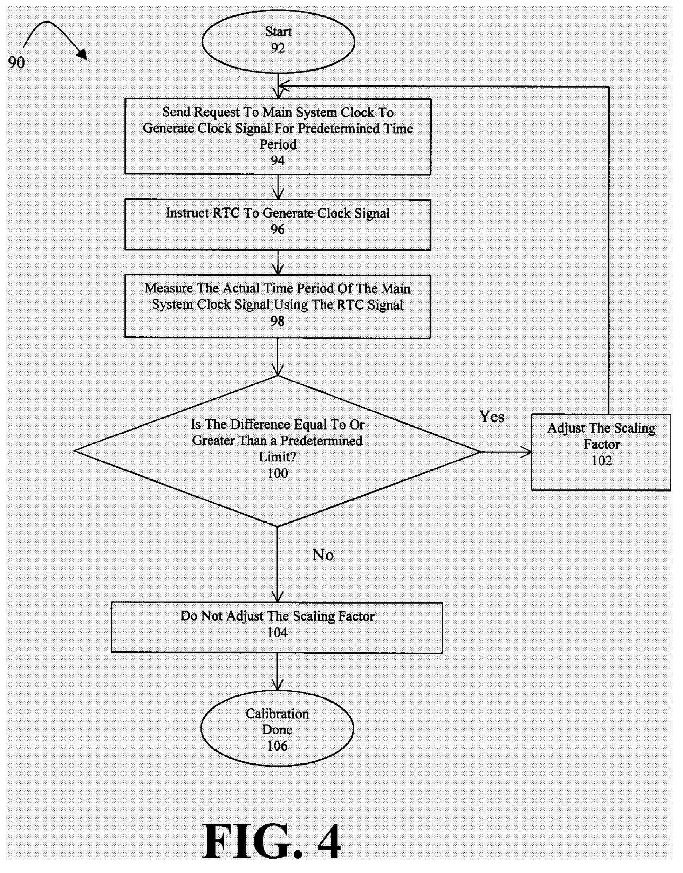

Referring now to FIG. 4, the software routine 90 executed by processor 61 to calculate and adjust or calibrate the scaling factor K is shown. Processor 61, at step 92, starts the execution of the software routine. Since the routine consumes time and system resources, it is important to execute the software routine at the appropriate times. In other words, when the appropriate triggering events occur. In AV devices, such as AV MP3 players, software routine 90 should be executed before enabling power to main processor 12, before waking main processor 12 from a sleep or stand by mode, and anytime a UART communication physical layer error occurs. It should be noted that a physical layer error (e.g., a parity error) will occur if the scaled clock signal used to drive UART module 76 contains a frequency offset error greater than or equal to 5%. Next, at step 94, processor 61 instructs main system clock 62 to generate a clock signal for a predetermined time period (e.g., 10ms). Then, at step 96, processor 61 instructs the more accurate RTC 70 to generate a signal (e.g., a 32.768 kHz signal) that processor 61 uses, at step 98, to measure the actual time period of the clock signal generated by main system clock 62. One way processor 61 can use RTC signal to measure the requested main system clock signal is by implementing a counter based on the RTC signal. The counter is then used to count the actual time period of the requested main system clock signal. Afterwards, at step 100, processor 61 determines if the offset between the actual time period and the requested time period is equal to or greater than a predetermined limit (e.g., 5%). It should be appreciated that this offset is equivalent to frequency offset error of the RC oscillator 64 of system clock 62. If the offset does not exceed a predetermined limit, processor 61, at step 104, does not adjust the scaling factor K and waits for the next software routine execution request (i.e., a request based detecting one of the events discussed above). If the offset does exceed a predetermined limit, processor 61, at step 102, adjusts the scaling factor K to remove the frequency offset error from the scaled clock signal used to drive UART module 76. Alternatively, processor 61 may adjusts the scaling factor K to reduce the frequency offset error in the scaled clock signal so the frequency offset error falls below the predetermined limit. Afterwards, processor 61 returns to step 94 and re-executes steps 94-100 to ensure that the frequency offset error in the scaled clock signal has been removed or reduced below the predetermined limit.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.


**Claims**

1.  A method for providing a stable clock signal in a device, the method comprising the steps of:

    requesting (94) first signal for a requested time period, said first signal having a first frequency and a frequency offset error;
    generating (96) a second signal having a second frequency;
    using (98) said second signal to measure an actual time period of said requested signal;
    determining (100) a difference between said requested time period and said actual time period;
    deriving (102) said frequency offset error from said difference; and
    adjusting (102) said first signal to remove said frequency offset error.

2.  The method of claim 1 wherein the first signal is a system clock signal generated by an RC oscillator (64).

3.  The method of claim 1 wherein the second signal is a real time clock signal generated by a crystal oscillator (72).

4.  The method of claim 1, further comprising the step of driving a universal asynchronous receiver/transmitter port (76) using said adjusted first signal.

5.  The method of claim 1, wherein the step of adjusting further comprises reducing said frequency of said first signal.

6.  The method of claim 5 wherein said frequency of said adjusted first signal is lower than said frequency of said first signal and higher than said frequency of said second signal.

7.  The method of claim 1 wherein the method is only initiated when said device is powered on, awoken from a sleep mode, or experiences a communication error.

8.  An apparatus for adjusting a clock signal used to drive a communications interface of a device, the apparatus comprising:

    a system clock (62) that generates a system clock signal at a first frequency within a first frequency tolerance range;
    a real time clock (70) that generates a real time clock signal at a second frequency within a second frequency tolerance range;
    a communications interface (76) that requires a clock signal having a frequency that is between said first frequency and said second frequency and a frequency tolerance range that is between said first frequency tolerance range and said second frequency tolerance range;
    a scaling module (78) connected to said system clock (62) and said communications module (76), said scaling module (78) adjusting said frequency and said frequency tolerance range of said system clock signal based upon an adjustment value and providing the adjusted system clock signal to said communications interface (76); and
    a processor (61) connected to said system clock (62), said real time clock (70) and said scaling module (78), said processor (61) detecting a triggering event, requesting that said system clock (62) generate a system clock signal for a desired time period, measuring an actual time period of said system clock signal using said real time clock signal, determining a difference between said desired time period and said actual time period, and deriving said adjustment value for said scaling module (78) based upon said difference and said clock signal frequency and frequency tolerance range required by said communications interface (76).

9. The apparatus of claim 8 wherein said system clock (62) includes an RC oscillator (64).

10. The apparatus of claim 8 wherein said real time clock (70) includes a crystal oscillator (72).

11. The apparatus of claim 8 wherein said communications interface is a universal asynchronous receiver/transmitter port (76).

12. The apparatus of claim 8 wherein said triggering event is one of said audio video device being powered on, awakening from a sleep mode, or experiencing a communication error.

13. An apparatus for providing a stable clock signal in a device, the apparatus comprising:

> means for requesting (94) a first signal for a requested time period, said first signal having a first frequency and a frequency offset error;
> means for generating (96) a second signal having a second frequency;
> means for using (98) said second signal to measure an actual time period of said requested signal;
> means for determining (100) a difference between said requested time period and said actual time period;
> means for deriving (102) said frequency offset error from said difference; and
> means for adjusting (102) said first signal to remove said frequency offset error.

14. The apparatus of claim 13 wherein said first signal is generated by an RC oscillator (64).

15. The apparatus of claim 13 wherein said means for generating second signal includes a crystal oscillator (72).

16. The apparatus of claim 13 further comprising a means for driving (61, 78) a universal asynchronous receiver/transmitter port (76) using said adjusted first signal.

17. The apparatus of claim 13 wherein said means for adjusting (102) further comprises a means for reducing (61, 78) said frequency of said first signal.

18. The apparatus of claim 17 wherein said frequency of said adjusted first signal is lower than said frequency of said first signal and higher than said frequency of said second signal.

19. The apparatus of claim 13 wherein said apparatus is only initiated when said device is powered on, awoken from a sleep mode, or experiences a communication error.

10

| Battery Detection 18 | Power Management 20 |

| IR 22 |

| MCU 14 |

| Matrix Scanning 16 |

TXD 26

RXD 28

| Main Processor 12 |

| RTC 24 |

16

# FIG. 1

FIG. 2

FIG. 3

```
          ┌──────────────┐
          │    Start     │
          │     92       │
          └──────────────┘
```

**Start**
92

**Send Request To Main System Clock To Generate Clock Signal For Predetermined Time Period**
94

**Instruct RTC To Generate Clock Signal**
96

**Measure The Actual Time Period Of The Main System Clock Signal Using The RTC Signal**
98

**Is The Difference Equal To Or Greater Than a Predetermined Limit?**
100

Yes

**Adjust The Scaling Factor**
102

No

**Do Not Adjust The Scaling Factor**
104

**Calibration Done**
106

90

# FIG. 4

**European Patent Office**

**EUROPEAN SEARCH REPORT**

Application Number

EP 05 30 0977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 084 685 A (MOELLER ET AL) 28 January 1992 (1992-01-28) * column 2, line 4 - line 35 * * column 2, line 59 - line 66 * * column 3, line 2 - line 5 * * column 4, line 16 - line 24 * ----- | 1-19 | G06F1/04 |
| A | DAVID BROWN <D...@NO.WESTCONTROL.SPAM.COM>: "Re: Why should I (not) use an internal oscillator for 8-bit micros" INTERNET DOCUMENT, [Online] 16 August 2004 (2004-08-16), XP002372568 comp.arch.embedded Retrieved from the Internet: URL:http://groups.google.fr/group/comp.arc h.embedded/msg/3a7cb85a2e97675e?dmode=sour ce&hl=fr> * page 1, line 33 - line 41 * * page 2, line 44 - line 50 * ----- | 1-19 | |
| A | GB 2 199 469 A (* PHILIPS ELECTRONIC AND ASSOCIATED INDUSTRIES LIMITED) 6 July 1988 (1988-07-06) * the whole document * ----- | 1,8,13 | **TECHNICAL FIELDS SEARCHED (IPC)** G06F |
| A | US 6 316 982 B1 (GUTIERREZ, JR. ALBERTO) 13 November 2001 (2001-11-13) ----- | | |
| A | US 2003/035444 A1 (ZWACK EDUARD) 20 February 2003 (2003-02-20) ----- | | |

The present search report has been drawn up for all claims

| Place of search | Date of completion of the search | Examiner |
|---|---|---|
| Berlin | 16 March 2006 | Ecolivet, S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 793 301 A1**

## ANNEX TO THE EUROPEAN SEARCH REPORT
## ON EUROPEAN PATENT APPLICATION NO.

EP 05 30 0977

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2006

| Patent document cited in search report | | Publication date | Patent family member(s) | | Publication date |
|---|---|---|---|---|---|
| US 5084685 | A | 28-01-1992 | AT | 112077 T | 15-10-1994 |
| | | | DE | 58908421 D1 | 27-10-1994 |
| | | | EP | 0428774 A1 | 29-05-1991 |
| | | | ES | 2060726 T3 | 01-12-1994 |
| GB 2199469 | A | 06-07-1988 | NONE | | |
| US 6316982 | B1 | 13-11-2001 | NONE | | |
| US 2003035444 | A1 | 20-02-2003 | EP | 1283611 A2 | 12-02-2003 |

EPO FORM P0459

For more details about this annex : see Official Journal of the European Patent Office, No. 12/82

11